# EUROPÄISCHE PATENTSCHRIFT

(11) **EP 2 248 636 B1**
(45) Veröffentlichungstag und Bekanntmachung des Hinweises auf die Patenterteilung: **19.11.2014**
(21) Anmeldenummer: 10003465.1
(22) Anmeldetag: 30.03.2010
(51) Int. Cl.: B25J 9/16

(54) **System und ein Verfahren zur Vermessung eines Manipulators**
System and a method for measuring a manipulator
Système et un procédé de mesure d'un manipulateur

(30) Priorität: 15.04.2009 DE 102009017491
(43) Veröffentlichungstag der Anmeldung: 10.11.2010
(73) Patentinhaber: KUKA Roboter GmbH, 86165 Augsburg (DE)
(72) Erfinder: Tscharnuter, Dietmar, 86316 Friedberg (DE)
(74) Vertreter: Schlotter, Alexander Carolus Paul

(56) Entgegenhaltungen:
- WO-A1-01/22125
- DE-A1- 19 947 374
- FR-A1- 2 764 992

## Beschreibung

Die vorliegende Erfindung betrifft ein System und ein Verfahren zur Vermessung eines Roboters, mittels Erfassen von Markern eines Markerträgers durch eine Erfassungsvorrichtung.

Beispielsweise aus der US 7,277,811 B1 und der gattungsbildenden WO 2008/107715 A2 ist die Vermessung von Robotern mittels Laser-Trackern bekannt. Diese erfassen dreidimensionale Lagen von Marker eines Markerträgers, der an dem Roboter befestigt ist. Die Lagen der Marker relativ zum Markerträger sind hochgenau vermessen. Durch die Bestimmung der Lage von drei Markern relativ zu dem Laser-Tracker kann so die Position, d.h. die Lage und/oder Orientierung des Markerträgers und damit auch eines Robotergliedes, beispielsweise eines Werkzeugflansches, an dem der Markerträger befestigt ist, bestimmt werden.

Die mittels Laser-Trackern erfassten Marker sind üblicherweise als Retroreflektoren ausgebildet, deren Spiegel einfallendes Laserlicht parallel in einen Detektor des Laser-Trackers zurückwerfen. Insbesondere bei solchen Markern mit einer begrenzten Erfassungsrichtung, in der sie von einer Erfassungsvorrichtung erfasst werden können, ist es erforderlich, diese Erfassungsrichtung auf die Relativposition zwischen Markern und Erfassungsvorrichtung abzustimmen.

Bei gebräuchlichen Laser-Trackern kann es dabei ausreichen, wenn die Retroreflektoren nur ungefähr in Richtung zum Laserkopf ausgerichtet sind. Daher erfolgt eine solche Ausrichtung nach betriebsinterner Praxis bisher manuell. Dies bedingt jedoch einen entsprechenden Zeit- und Personalaufwand zur Ausrichtung mehrerer Retroreflektoren in jeder zu vermessenden Pose sowie eine mit manuellen Eingriffen einhergehende schlechtere Reproduzierbarkeit und Personengefährdung, und ist überdies in manchen Anwendungsfällen nur schwer oder gar nicht möglich, beispielsweise bei der Vermessung großer Manipulatoren, ungünstigen Einbaupositionen oder in ungünstigen Posen.

Die WO 2008/107715 A2 schlägt vor, am Grundgestell und einem Roboterarm je einen Markerträger mit einer Vielzahl von Markern zu befestigen und diese durch einen ebenfalls am Roboter befestigten Laser-Tracker sowie einen ortsfesten Laser-Tracker zu erfassen.

Die DE 199 47 374 A1 offenbart ein System zur Ermittlung von geometrischen Abweichungen in den Führungen von Koordinatenmessgeräten oder Werkzeugmaschinen. Dabei wird mehrmals durch ein in der Umgebung der Maschine befindliches optisches Längenerfassungssystem der eindimensionale Abstand zu einem Marker an der Maschine gemessen. Der Marker besteht aus einem Reflektionselement, z.B. einem 3-Flächenspiegel, der um eine Achse automatisch schwenkbar gestaltet sein kann.

Nachteilig ist dabei keine optimale Abstimmung der Erfassungsrichtungen der einzelnen Retroreflektoren auf verschiedene Relativpositionen zwischen ihnen und den Laser-Trackern möglich.

Aufgabe der vorliegenden Erfindung ist es, die Vermessung eines zu verbessern.

Diese Aufgabe wird durch ein System mit den Merkmalen des Anspruchs 1 gelöst. Anspruch 13 stellt einen Markerträger für ein solches System, Anspruch 14 ein Verfahren zur Vermessung eines Roboters mittels eines solchen Systems unter Schutz. Die Unteransprüche betreffen vorteilhafte Weiterbildungen.

Die Erfindung betrifft die Vermessung eines Roboters, beispielsweise zur Basis- oder Werkzeugeinmessung, zur Nulljustage, zur Kalibrierung, zur Beurteilung einer Positionier- oder Bahngenauigkeit oder zur Verifikation bei Verwendung des Roboters als Koordinatenmessmaschine.

Als Vermessung wird dabei insbesondere die Bestimmung einer Position, i.e. einer Lage und/oder Orientierung, oder einer Positionsänderung eines oder mehrerer roboterfester Referenzpunkte oder -koordinatensysteme relativ zu einem Bezugssystem bezeichnet, beispielsweise die Bestimmung der kartesische Lage und Orientierung eines Robotergliedes oder des Tool Center Points (TCP) relativ zu einem raum-, insbesondere basisfesten Koordinatensystem oder einem anderen roboterfesten Koordinatensystem.

Hierzu ist an einem Glied des Roboters, beispielsweise seinem Werkzeugflansch, seinem Handgelenk oder dergleichen, ein Markerträger mit einer Mehrzahl von Markern lösbar oder unlösbar befestigt, beispielsweise angeschraubt, angeschweißt, integral mit dem Roboterglied ausgebildet oder von einem Greifer gegriffen.

Bei den Markern kann es sich gleichermaßen um aktive Sender, beispielsweise Lichtquellen, oder um passive Reflektoren, insbesondere Retroreflektoren, handeln. Die Marker können ihrerseits lösbar oder unlösbar an dem Markerträger befestigt sein, wobei vorzugsweise ihre Positionen relativ zu dem Markerträger, insbesondere seiner Schnittstelle zu dem Roboterglied, und damit auch zu einem zu bestimmenden roboterfesten Referenzkoordinatensystem bekannt oder jedenfalls nicht oder nur in bekannter Weise veränderbar sind.

Eine Erfassungsvorrichtung erfasst die Position, insbesondere eine dreidimensionale Lage, eines oder mehrerer Marker des Markerträgers relativ zu einem Bezugssystem. Die Erfassungsvorrichtung kann insbesondere eine optische Erfassungsvorrichtung zur Detektion von elektromagnetischen Wellen, vorzugsweise Laserlicht, aufweisen, die von den Markern ausgestrahlt oder reflektiert werden. Die zu reflektierenden Wellen können von der Erfassungsvorrichtung ausgestrahlt werden. Die Erfassungsvorrichtung kann zum Beispiel einen Laser-Tracker, eine CCD- oder eine Kryptonkamera umfassen. Insbesondere kann, beispielsweise mittels Laserinterferometrie oder Laufzeitmessung, ein Abstand zwischen der Erfassungsvorrichtung und einem Marker bestimmt werden, aus dem zusammen mit der Richtung, in der dieser Abstand bestimmt wird, die dreidimensionale Lage des Markers ermittelt werden kann.

Aus den dreidimensionalen Lagen von wenigstens drei Markern, die nicht alle auf einer Geraden liegen, kann die Lage und Orientierung eines durch diese drei Marker definierten Koordinatensystems und damit eines Referenzkoordinatensystems bestimmt werden, dessen Lage und Orientierung relativ zu den Markern bekannt ist, beispielsweise des TCPs, dessen Lage und Orientierung relativ zu dem Markerträger bekannt ist. Durch Vergleich der erfassten Positionen von Markern in verschiedenen Posen des Roboters kann beispielsweise eine Wiederhol- oder Positioniergenauigkeit ermittelt werden.

Erfindungsgemäß wird nun vorgeschlagen, einen oder mehrere Marker, insbesondere die zu erfassenden Marker, automatisch relativ zu der Erfassungsvorrichtung auszurichten. Dadurch kann die Vermessung, wenigstens teilweise, automatisiert werden, was vorteilhaft die Reproduzierbarkeit der Messergebnisse sowie die Stabilität des Vermessungsprozesses verbessert und die Personengefährdung und/oder die Vermessungszeit reduzieren kann. Die Erfindung kann es auch ermöglichen oder vereinfachen, Roboter in schwer zugänglichen Posen, beispielsweise einer ausgestreckten Kerzenstellung, in schwer zugänglichen Einbaulagen, beispielsweise Decken- oder Wandmontage, oder große oder unzugängliche Roboter zu vermessen, was bislang den Zustieg per Leiter oder Podest zur manuellen Ausrichtung der Marker erforderte.

Ein von einer Erfassungsvorrichtung zu erfassender Marker weist wenigstens eine Erfassungsrichtung auf, in der er von der Erfassungsvorrichtung erfasst werden kann. Beispielsweise weist ein einfacher Spiegel mit seiner Oberflächennormalen oder ein Lasermarker mit seiner Emittierrichtung genau eine Erfassungsrichtung auf, ein üblicher Retroreflektor mit drei, vorzugsweise wechselseitig orthogonalen, Spiegeln oder einem Prisma eine Schar von Erfassungsrichtungen, die sich im Regelfall im Schnittpunkt der drei Spiegel oder einer Ecke des Prismas schneiden und ein Kugelsegment bilden, und ein von einer CCD-Kamera erfassbarer kugelförmiger reflektierender Marker eine Schar von Erfassungsrichtungen, die sich alle im Mittelpunkt der Kugel schneiden und - abgesehen von durch die Befestigung solcher Marker abgeschatteten Bereichen - den ganzen Raum ausfüllen. Bei einem Retroreflektor kann insbesondere die Richtung, die mit den Schnittlinien der drei Spiegel die gleichen Winkel einschließt, bzw. die Mittellinie des Bereichs, in dem der Retroreflektor einfallende Lichtstrahlen reflektiert, als eine Haupterfassungsrichtung oder die Erfassungsrichtung des Retroreflektors definiert sein.

Unter einer Ausrichtung eines Markers relativ zu der Erfassungsvorrichtung wird daher vorliegend insbesondere die Ausrichtung (s)einer Erfassungsrichtung auf einen Sender und/oder Empfänger der Erfassungsvorrichtung verstanden. Dies kann beispielsweise durch entsprechende Verstellung von Spiegeln, Blenden, Lichtleitern oder dergleichen erfolgen. Erfindungsgemäß ist vorgesehen, dass der Marker, insbesondere motorisch, vorzugsweise elektromotorisch, relativ zu dem Markerträger verstellbar ist. Hierzu ist dieser Marker relativ zu dem Markerträger um mehrere Achsen dreh- und/oder verschiebbar ausgebildet, die vorzugsweise im Wesentlichen orthogonal sind, was einen großen Verstellbereich ermöglicht. Eine besonders günstige Ausrichtbarkeit kann dadurch erreicht werden, dass der Marker um eine in Erfassungsrichtung orientierte Achse drehbar ist. Dann kann durch Drehung um diese Achse eine zweite Achse relativ zu der Erfassungsvorrichtung ausgerichtet und anschließend der Marker durch Drehung um diese zweite Achse zur Erfassungsvorrichtung hin gekippt werden.

Insbesondere zur Bestimmung der Orientierung eines Referenzsystems ist die Erfassung von wenigstens drei Markern erforderlich. Werden mehr Marker erfasst, kann durch Mittelung vorteilhaft die Genauigkeit erhöht werden.

Da der Markerträger üblicherweise die Rückseiten der auf ihm angeordneten Marker gegen die Erfassungsvorrichtung abschattet, sind in einer bevorzugten Ausführung auf einer oder mehreren, insbesondere einander gegenüberliegenden Seiten des Markerträgers je ein oder bevorzugt wenigstens drei oder mehr Marker angeordnet. Auf diese Weise können in einer Viehzahl unterschiedlicher Positionen des Markerträgers stets Marker erfasst werden, die demjenigen Teilraum zugeordnet sind, der durch die Seite des Markerträgers abgegrenzt ist, auf der diese Marker angeordnet sind, und in dem die Erfassungsvorrichtung liegt.

Daher sind die Marker auf den Seiten des Markerträgers bevorzugt so angeordnet, dass im Wesentlichen jedem Teilraum je wenigstens drei Marker zugeordnet sind, die von einer Erfassungsvorrichtung in diesem Teilraum erfasst werden können. Sind beispielsweise Marker in einem Halbraum erfassbar, da zum Beispiel ihre Erfassungsrichtung um im Wesentlichen 180° verstellbar ist, können auf gegenüberliegenden Seiten eines vorzugsweise flachen Markerträgers je wenigstens drei Marker angeordnet werden. Dann können in nahezu jeder Position des Markerträgers wenigstens drei Marker auf die ihnen gegenüberliegende Erfassungsvorrichtung ausgerichtet und durch diese erfasst werden. Ist der Markerträger hingegen beispielsweise im Wesentlichen quaderförmig, so dass seine Seiten sechs einander teilweise überschneidende Teilräume abgrenzen, können auf jeder Seite wenigstens drei Marker angeordnet sein. In Extrapolation dieser Beispiele kann der Markerträger als Polyeder oder Kugel ausgebildet sein, auf dessen bzw. deren Oberfläche die Marker derart verteilt sind, dass in im Wesentlichen jeder Position des Markerträgers wenigstens drei, vorzugsweise wenigstens vier Marker zu einer beliebig relativ zum Markerträger positionierten Erfassungsvorrichtung hin ausgerichtet und von dieser erfasst werden können. Die Verteilung hängt dabei insbesondere vom Verstellbereich der einzelnen Marker ab. Sind einzelne Marker nicht verstellbar, müssen entsprechend mehr Marker und/oder andere Marker mit größerem Verstellbereich vorgesehen sein.

Es kann vorteilhaft sein, dass Erfassungsrichtungen zweier Marker, die unterschiedlichen Teilräumen zugeordnet sind, insbesondere zweier einander im Wesentlichen gegenüberliegender Marker auf verschiedenen Seite des Markerträgers, im Wesentlichen parallel zueinander sind, wenn die beiden Marker in einer Nullstellung positioniert sind. Als Nullstellung kann dabei beispielsweise eine Stellung des Markers relativ zu dem Markerträger definiert sein, von der aus der Marker in verschiedene, insbesondere alle Richtungen im Wesentlichen gleich weit verstellbar ist.

In einer bevorzugten Ausführung ist eine Steuereinrichtung zur automatischen Verstellung eines Markers des Markerträgers, insbesondere zur Ansteuerung von die Marker bewegenden Stellmotoren, vorgesehen, die zur Kommunikation mit einer Robotersteuerung ausgebildet und/oder mit dem Markerträger über eine Leitung oder drahtlos verbunden oder an diesem befestigt sein kann. Die Steuereinrichtung erhält in einer bevorzugten Ausführung von der Robotersteuerung, vorzugsweise über eine Standardschnittstelle, die aktuelle Pose des Roboters, beispielsweise seine Gelenkwinkel, und kann hieraus die erforderliche Ausrichtung der roboterfesten Marker relativ zu einer orts- oder roboterfesten Erfassungsvorrichtung bestimmen. Gleichermaßen ist auch eine Ausrichtung der Marker auf Basis eines entsprechenden Leitsignals von der Erfassungsvorrichtung, auf Basis einer, beispielsweise mittels GPS erfassbaren, Absolutposition des Markerträgers oder dergleichen möglich.

Vorzugsweise weist die Steuereinrichtung eine, insbesondere energiefreie, Speichereinrichtung auf, in der Daten, beispielsweise Mess- und/oder Referenzwerte, stromunabhängig gespeichert werden können. Eine Standardschnittstelle ermöglicht vorteilhaft eine Plug&Play-Verbindung mit der Robotersteuerung. Hierfür ist auch ein entsprechendes Programm, das in der Speichereinrichtung der Steuereinrichtung vorgesehen sein kann, vorteilhaft, welches beispielsweise die Ausrichtung der Marker steuert oder Erfassungspositionen vorgibt.

Eine Erfassungsposition, in die der an dem Roboter befestigte Markerträger durch den Roboter gebracht und in der wenigstens ein Marker automatisch relativ zu der Erfassungsvorrichtung ausgerichtet und in der Marker von der Erfassungsvorrichtung erfasst werden, kann in einer bevorzugten Ausführung unter Berücksichtigung der Anordnung und Verstellbarkeit der Marker so gewählt werden, dass wenigstens drei, insbesondere wenigstens vier oder mehr Marker durch die Erfassungsvorrichtung erfasst werden können.

Weitere Vorteile und Merkmale ergeben sich aus den Unteransprüchen und den Ausführungsbeispielen. Hierzu zeigt, teilweise schematisiert:
- Fig. 1A:: ein System zur Vermessung eines Roboters in einer Pose nach einer Ausführung der vorliegenden Erfindung ; und
- Fig. 1B:: das System nach Fig. 1A zur Vermessung des Roboters in einer anderen Pose;
- Fig. 2:: einen Markerträger des Systems nach Fig. 1 in um 90° gedrehter Stellung;
- Fig. 3A:: einen Marker des Markerträgers nach Fig. 2 in seitlicher, teilweise geschnittener Ansicht; und
- Fig. 3B:: den Marker nach Fig. 3A in Draufsicht.

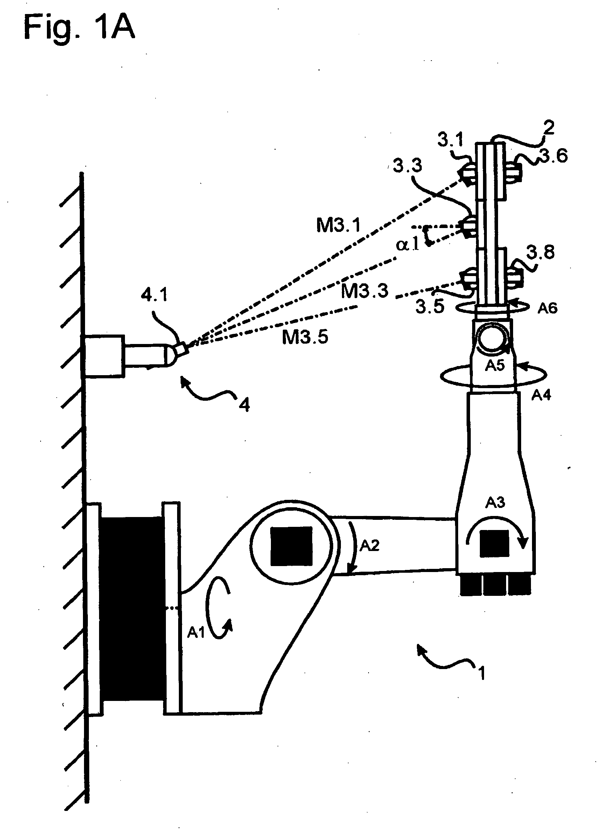

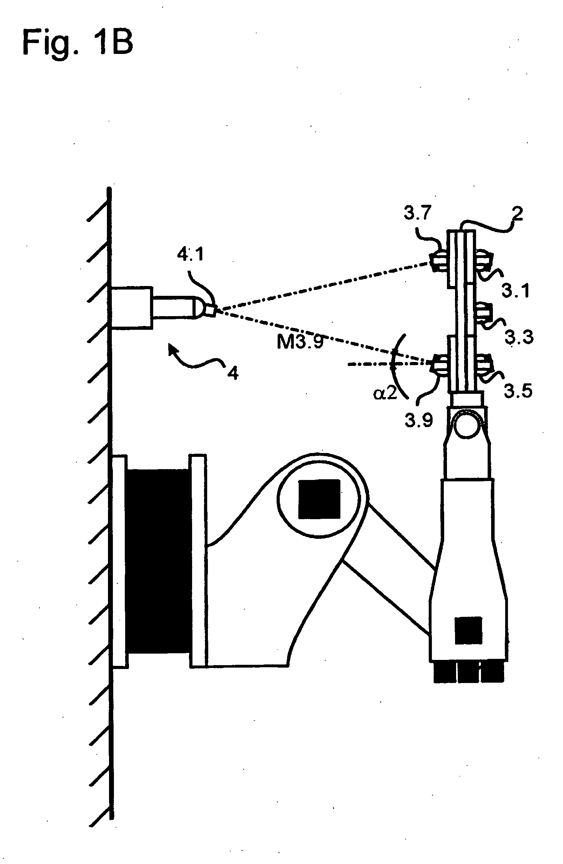

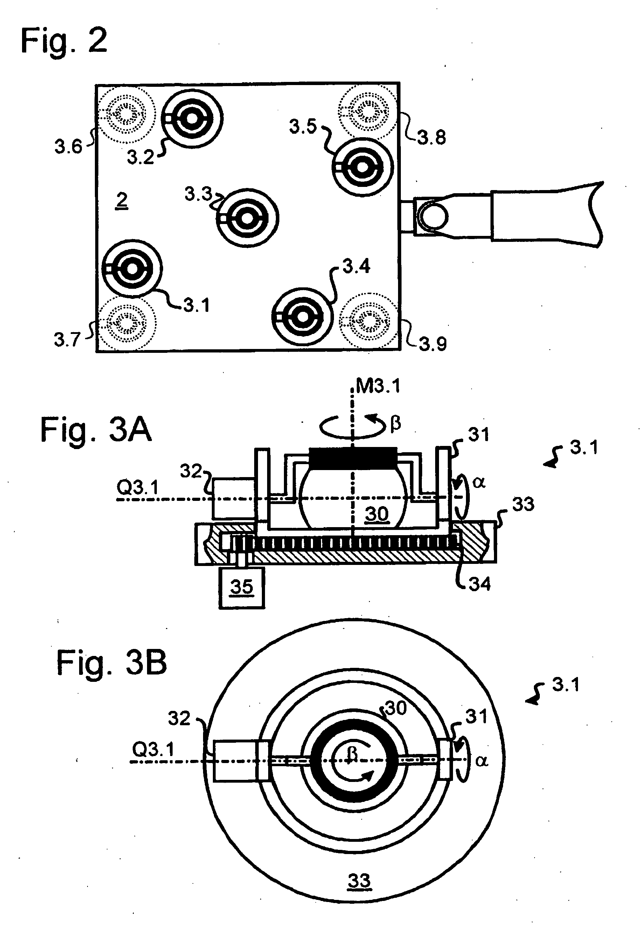

Fig. 2 zeigt in einer Draufsicht, die Fig. 1A, 1B in einer Seitansicht, einen Markerträger in Form einer Messtafel 2, auf deren einander gegenüberliegenden Flachseiten (links, rechts in Fig. 1, vorne, hinten in Fig. 2) vier bzw. fünf Marker in Form von Retroreflektoren 3.1,...3.9 angeordnet sind. In Fig. 2 sind die vier Marker 3.6,...3.9 auf der gegenüberliegende Rückseite strichliert angedeutet. Wie insbesondere daraus erkennbar, sind die Marker auf jeder Flachseite maximal voneinander beabstandet, wobei benachbarte Marker auf einander gegenüberliegenden Flachseiten möglichst nahe beieinander positioniert sind. D.h., die Marker 3.1 und 3.7, die Marker 3.2 und 3.6, die Marker 3.4 und 3.9 sowie die Marker 3.5 und 3.8 sind jeweils so nahe zusammen positioniert, wie dies baulich möglich ist.

Die baugleichen Marker, von denen in Fig. 3 Marker 3.1 exemplarisch dargestellt ist, umfassen eine hochgenau gefertigte Stahlkugel 30 mit einer zylindrischen Bohrung, deren erhobener Rand in den Figuren schwarz ausgefüllt angedeutet ist. In diese Bohrung sind drei Spiegel derart eingeklebt, dass sich ihre Schnittgeraden im Mittelpunkt der Kugel 30 treffen. Die drei paarweise orthogonalen Spiegel reflektieren in die Bohrung einfallendes Licht parallel. Insbesondere, wenn die Gerade durch den Schnittpunkt der drei Spiegelschnittgeraden, die mit allen drei Spiegel denselben Winkel einschließt, bzw. die Mittellinie der Bohrung ungefähr auf einen Lasersende- und -empfängerkopf 4.1 eines Laser-Trackers 4 ausgerichtet ist (vgl. Fig. 1 ), kann die dreidimensionale Lage des Schnitt- bzw. Kugelmittelpunktes durch den Laser-Tracker bestimmt werden. Daher wird diese in Fig. 1, 3A strichpunktiert eingezeichnete Gerade als Erfassungsrichtung M3.1 des Retroreflektors 30 definiert.

Die Stahlkugel 30 ist in einer beispielsweise bei astronomischen Teleskopen bekannten Lagerung um zwei orthogonale Achsen drehbar. Hierzu ist die Kugel 30 um eine Achse Q3.1 drehbar in einem Lagering 31 gelagert und kann durch einen Elektromotor 32 verschwenkt werden. Der Lagerring 31 mit Motor 32 kann seinerseits durch einen Elektromotor 35 über eine Außenverzahnung 34 am Lagerring 31 in einer Grundplatte 33 gedreht werden, die ihrerseits an der Messtafel 2 befestigt, beispielsweise mit dieser verschraubt ist.

Fig. 3 zeigt die Nullstellung des Markers 3.1, in der er in alle Richtungen gleich weit verschwenkbar ist. In dieser Nullstellung ist seine Erfassungsrichtung M3.1, die mit der Drehachse der Außenverzahnung 34 zusammenfällt, orthogonal zur Grundplatte 33 bzw. der entsprechenden Flachseite der Messtafel 2. Eine Verdrehung gegenüber dieser Nullstellung um die Erfassungsrichtung M3.1 wird durch den Winkel β, ein Verschwenken der Kugel 30 um die Achse Q3.1 im Lagerring 31 durch den Winkel α beschrieben.

In Fig. 1 ist die Messtafel 2 am Werkzeugflansch eines sechsachsigen Knickarmroboters 1 befestigt, dessen durch schwarz ausgefüllt angedeutete Motoren seine sechs Bewegungsachsen A1,...A6 aktuieren. Der Roboter ist an einer vertikalen Wand montiert und im Wesentlichen nach oben ausgestreckt, so dass die Marker 3.1,...3.9 manuell nur schwer zugänglich wären. Eine Erfassungsvorrichtung 4 mit einem Laser-Tracker 4.1 ist ebenfalls an der Wand montiert.

In Fig. 1A nimmt der Roboter 1 eine erste Messpose ein, in der die mit fünf Markern 3.1,...3.5 bestückte Flachseite der Messtafel 2 vertikal ausgerichtet ist. Zur besseren Darstellung sind nur drei der fünf linken und zwei der vier rechten Marker eingezeichnet.

Eine in die Messtafel integrierte Steuereinrichtung (nicht dargestellt) erhält von der Robotersteuerung die Achswinkel A1,...A6 und enthält zusätzlich in einem Speicher die Kinematik, insbesondere Achsabstand und -versatz des Roboters 1, die Positionen der Marker relativ zum Werkzeugflansch, sowie die Absolutposition des ortsfesten Laser-Trackers 4.1. Hieraus ermittelt sie die Verstellwinkel α1, β der der Erfassungsvorrichtung 4 zugewandten Marker 3.1,...3.5 und steuert deren Elektromotoren 32, 35 so an, dass die Erfassungsrichtungen M3.1,...M3.5 auf den Laser-Tracker 4.1 ausgerichtet werden. Alternativ kann die Steuereinrichtung beispielsweise auch die Absolutkoordinaten des Werkzeugflansches von der Robotersteuerung oder einem GPS-Empfänger erhalten und hieraus die erforderlichen Verstellwinkel α1, β ermitteln. Nachdem die Marker 3.1,...3.5 relativ zu der Erfassungsvorrichtung 4 ausgerichtet sind, erfasst der Laser-Tracker 4.1 ihre Lage im kartesischen Raum und bestimmt daraus Lage und Orientierung der Messtafel 2. Hieraus kann beispielsweise eine Positioniergenauigkeit des Roboters 1 ermittelt werden.

Fig. 1B zeigt die Vermessung in einer anderen Pose des Roboters 1, in der dieser seinen Arm abgesenkt und sein Handgelenk um 180° um die Achse A6 gedreht hat. Nun liegen die vier Marker 3.6,...3.9 auf der anderen Flachseite der Messtafel 2 der Erfassungsvorrichtung 4 gegenüber. Daher richtet in der oben erläuterten Weise die Steuereinrichtung die Erfassungsrichtungen dieser Marker auf den Laser-Tracker 4.1 aus und verstellt hierzu unter anderem den in Fig. 1B eingezeichneten Winkel α2 der Erfassungsrichtung M3.9 des Markers 3.9 gegenüber dessen Nullstellung, bevor der Laser-Tracker 4.1 die Lagen der Marker 3.6,...3,9 im kartesischen Raum erfasst und daraus Lage und Orientierung der Messtafel 2 in der anderen Pose des Roboters 1 bestimmt. Hieraus kann beispielsweise eine Bahngenauigkeit des Roboters 1 ermittelt werden.

Die Posen der Fig. 1 bestimmt die Steuereinrichtung oder die Robotersteuerung so, dass stets wenigstens vier Marker 3.1,...3.9 von der Erfassungsvorrichtung 4 erfasst werden können.

### Bezugszeichenliste

- 1: Roboter
- 2: Messtafel (Markerträger)
- 3.1,...3.9: Retroreflektor (Marker)
- 4: Erfassungsvorrichtung
- 4.1: Laser-Traker

- 30: Stahlkugel
- 31: Lagerring
- 32,35: Elektromotor
- 33: Grundplatte
- 34: Verzahnung

- M3.1,...M3.9: Erfassungsrichtung, Drehachse
- Q3.1: Drehachse
- α, α1, α2, β: Drehwinkel

## Patentansprüche

1. System zur Vermessung eines Roboters (1), mit einem Markerträger (2) mit einer Mehrzahl von Markern (3.1,...3.9); und
einer Erfassungsvorrichtung (4) zur Erfassung von Markern des Markerträgers; **dadurch gekennzeichnet, dass**
wenigstens ein Marker (3.1,...3.9) automatisch relativ zu der Erfassungsvorrichtung (4) ausrichtbar ist, wobei ein Marker relativ zu dem Markerträger um zwei Achsen (M3.1,...M3.9, Q3.1) drehbar und/oder verschiebbar ist, insbesondere um zwei im Wesentlichen orthogonale Achsen.

2. System nach Anspruch 1, **dadurch gekennzeichnet, dass** wenigstens ein Marker (3.1,...3.9) des Markerträgers automatisch relativ zu dem Markerträger (2) verstellbar ist.

3. System nach Anspruch 2, **dadurch gekennzeichnet, dass** ein Marker motorisch, insbesondere elektromotorisch (32, 35) verstellbar ist.

4. System nach einem der vorhergehenden Ansprüche, **dadurch gekennzeichnet, dass** ein Marker relativ zu dem Markerträger um wenigstens eine Achse (M3.1,...M3.9, Q3.1) drehbar ist.

5. System nach einem der vorhergehenden Ansprüche 4 bis 5, **dadurch gekennzeichnet, dass** ein Marker relativ zu dem Markerträger um eine in einer Erfassungsrichtung (M3.1,...M3.9, Q3.1) orientierte Achse drehbar ist.

6. System nach einem der vorhergehenden Ansprüche, **dadurch gekennzeichnet, dass** auf einer Seite des Markerträgers wenigstens drei, vorzugsweise wenigstens vier Marker (3.1,...3.5; 3.6,...3.9) angeordnet sind.

7. System nach einem der vorhergehenden Ansprüche, **dadurch gekennzeichnet, dass** Teilräumen, die durch eine Seite des Markerträgers gegeneinander abgegrenzt sind, insbesondere zwei Halbräumen, je wenigstens ein, insbesondere je wenigstens drei, vorzugsweise je wenigstens vier Marker (3.1,...3.5; 3.6,...3.9) zugeordnet ist bzw. sind.

8. System nach Anspruch 7, **dadurch gekennzeichnet, dass** Erfassungsrichtungen (M3.1,...M3.9) zweier Marker (3.1,...3.5; 3.6,...3.9), die unterschiedlichen Teilräumen zugeordnet sind, insbesondere zweier einander im Wesentlichen gegenüberliegender Marker, im Wesentlichen parallel zueinander sind, wenn die beiden Marker in einer Nullstellung positioniert sind.

9. System nach einem der vorhergehenden Ansprüche, **gekennzeichnet durch** eine Steuereinrichtung zur automatischen Verstellung eines Markers des Markerträgers und/oder der Erfassungsvorrichtung, wobei die Steuereinrichtung insbesondere zur Kommunikation mit einer Robotersteuerung ausgebildet ist.

10. System nach Anspruch 9, **dadurch gekennzeichnet, dass** die Steuereinrichtung eine, insbesondere energiefreie, Speichereinrichtung und/oder eine Standard-Schnittstelle aufweist.

11. System nach einem der vorhergehenden Ansprüche, **dadurch gekennzeichnet, dass** die Erfassungsvorrichtung (4) eine optische Erfassungsvorrichtung, insbesondere einen Laser-Tracker (4.1), aufweist.

12. System nach Anspruch 11, **dadurch gekennzeichnet, dass** ein Marker wenigstens einen Sender und/oder Reflektor, insbesondere einen Retroreflektor (30) aufweist.

13. Markerträger (2) mit einer Mehrzahl von Markern (3.1,...3.9) für ein System nach einem der vorhergehenden Ansprüche, **dadurch gekennzeichnet, dass** wenigstens ein Marker (3.1,...3.9) des Markerträgers um zwei Achsen automatisch relativ drehbar und/oder verschiebbar zu dem Markerträger verstellbar ist.

14. Verfahren zur Vermessung eines Roboters (1), mittels eines Systems nach einem der vorhergehenden Ansprüche 1 bis 12, **dadurch gekennzeichnet, dass** der an dem Roboter (1) befestigte Markerträger (2) durch diesen in wenigstens eine Erfassungsposition (Fig. 1A, Fig. 1B) gebracht wird, dass wenigstens ein Marker (3.1,...3.9) um zwei Achsen automatisch relativ drehbar und/oder verschiebbar zu der
Erfassungsvorrichtung (4) ausgerichtet wird, und dass die Erfassungsvorrichtung Marker des Markerträgers erfasst.

## Claims

1. A system for measurement of a robot (1), with a marker carrier (2) with a plurality of markers (3.1,...3.9); and
a detection device (4) for detection of markers of the marker carrier;
**characterized in that**
at least one marker (3.1,...3.9) is automatically orientable relatively to the detection device (4), wherein
a marker is pivotable and/or shiftable relatively to the marker carrier with respect to two axes (M3.1,...M3.9, Q3.1), in particular with respect to two essentially orthogonal axes.

2. A system according to claim 1, **characterized in that** at least one marker (3.1,...3.9) of the marker carrier is automatically adjustable relatively to the marker carrier (2).

3. A system according to claim 2, **characterized in that** a marker is motorically adjustable, in particular electromotorically (32, 35).

4. A system according to one of the preceding claims, **characterized in that** a marker is pivotable relatively to the marker carrier with respect to at least one axis (M3.1,...M3.9, Q3.1).

5. A system according to one of the preceding claims 4 to 5, **characterized in that** a marker is pivotable relatively to the marker carrier with respect to an axis that is oriented towards a detection direction (M3.1,...M3.9, Q3.1).

6. A system according to one of the preceding claims, **characterized in that** at least three, preferably at least four markers (3.1,...3.5; 3.6,...3.9) are arranged on one side of the marker carrier.

7. A system according to one of the preceding claims, **characterized in that** at least one, in particular at least three preferably at least four markers (3.1,...3.5; 3.6,...3.9) are assigned to half-spaces, which are mutually separated by one side of the marker carrier, in particular two half-spaces, each.

8. A system according to claim 7, **characterized in that** detection directions (M3.1,...M3.9) of two markers (3.1,...3.5; 3.6,...3.9), which are assigned to different half-spaces, in particular two essentially mutually opposing markers, are essentially parallel to each other, if both markers are positioned in a null position.

9. A system according to one of the preceding claims, **characterized by** a control means for automated adjustment of a marker of the marker carrier and/or of the detection device, wherein the control means is in particular designed for communication with a robot control.

10. A system according to claim 9, **characterized in that** the control means comprises an, in particular energy-free, storage means and/or a standard interface.

11. A system according to one of the preceding claims, **characterized in that** the detection device (4) comprises an optical detection device, in particular a laser tracker (4.1).

12. A system according to claim 11, **characterized in that** a marker comprises at least one sender and/or reflector, in particular a retro-reflector (30).

13. A marker carrier (2) with a plurality of markers (3.1,...3.9) for a system according to one of the preceding claims, **characterized in that** at least one marker (3.1,...3.9) of the marker carrier is pivotably and/or shiftably adjustable with respect to two axes relatively to the marker carrier in an automated manner.

14. A method for measurement of a robot (1) by a system according to one of the preceding claims 1 to 12, **characterized in that** the marker carrier (2) mounted to the robot (1) is brought in to at least one detection position (Fig. 1A, Fig. 1 B) by the robot, that at least one marker (3.1,...3.9) is pivotably and/or shiftably oriented with respect to two axes relatively to the detection device (4) in an automated manner and that the detection device detects markers of the marker carrier.

## Revendications

1. Système de mesure d'un robot (1) comportant un porte-marqueurs (2), lequel comprend une pluralité de marqueurs (3.1 .... 3.9) ; et un dispositif de détection (4) pour la détection de marqueurs du porte-marqueurs ;
**caractérisé en ce qu'**
au moins un marqueur (3.1 ... 3.9) est orientable automatiquement par rapport au dispositif de détection (4),
un marqueur pouvant pivoter et/ou se déplacer par rapport au porte-marqueurs autour de deux axes (M3.1, ... M3.9, Q3.1), en particulier autour de deux axes essentiellement orthogonaux.

2. Système selon la revendication 1, **caractérisé en ce qu'**au moins un marqueur (3.1, ... 3.9) du porte-marqueurs peut être déplacé automatiquement par rapport au porte-marqueurs (2).

3. Système selon la revendication 2, **caractérisé en ce qu'**un marqueur peut être déplacé à l'aide d'un moteur, en particulier d'un moteur électrique (32, 35).

4. Système selon l'une quelconque des revendications précédentes, **caractérisé en ce qu'**un marqueur peut pivoter par rapport au porte-marqueurs autour d'au moins un axe (M3.1, ... M3.9, Q3.1).

5. Système selon l'une quelconque des revendications précédentes 4 à 5, **caractérisé en ce qu'**un marqueur peut pivoter par rapport au porte-marqueurs autour d'un axe orienté dans un sens de détection (M3.1, ... M3.9, Q3.1).

6. Système selon l'une quelconque des revendications précédentes, **caractérisé en ce qu'**au moins trois, de préférence au moins quatre marqueurs (3.1, ... 3.5 ; 3.6, ... 3.9) sont disposés sur un côté du porte-marqueurs.

7. Système selon l'une quelconque des revendications précédentes, **caractérisé en ce qu'**au moins un, en particulier au moins trois, de préférence au moins quatre marqueurs (3.1, ... 3.5 ; 3.6, ... 3.9) est/sont affectés à chacun des compartiments partiels, délimités l'un par rapport à l'autre par un côté du porte-marqueurs, en particulier deux demi-compartiments.

8. Système selon la revendication 7, **caractérisé en ce que** des sens de détection (M3.1, ... M3.9) de deux marqueurs (3.1, ... 3.5 ; 3.6, ... 3.9), affectés à différents compartiments partiels, en particulier de deux marqueurs situés essentiellement l'un en face de l'autre, sont essentiellement parallèles entre eux lorsque les deux marqueurs sont en position zéro.

9. Système selon l'une quelconque des revendications précédentes, **caractérisé par** un dispositif de commande pour le déplacement automatique d'un marqueur du porte-marqueurs et/ou du dispositif de détection, le dispositif de commande étant conçu en particulier pour communiquer avec une commande du robot.

10. Système selon la revendication 9, **caractérisé en ce que** le dispositif de commande présente un moyen de stockage, lequel fonctionne en particulier sans énergie, et/ou une interface standard.

11. Système selon l'une quelconque des revendications précédentes, **caractérisé en ce que** le dispositif de détection (4) présente un dispositif de détection optique, en particulier un laser de poursuite (4.1).

12. Système selon la revendication 11, **caractérisé en ce qu'**un marqueur présente au moins un émetteur et/ou un réflecteur, en particulier un rétroréflecteur (30).

13. Porte-marqueurs (2) comportant une pluralité de marqueurs (3.1, ... 3.9) pour un système selon l'une quelconque des revendications précédentes, **caractérisé en ce qu'**au moins un marqueur (3.1, ... 3.9) du porte-marqueurs peut pivoter et/ou peut être déplacé automatiquement par rapport au porte-marqueurs autour de deux axes.

14. Procédé de mesure d'un robot (1) au moyen d'un système selon l'une quelconque des revendications précédentes 1 à 12, **caractérisé en ce que** le porte-marqueurs (2) fixé sur le robot est amené par celui-ci au moins dans une position de détection (Fig. 1A, Fig. 1B), au moins un marqueur (3.1, ... 3.9) peut être orienté de manière à pouvoir pivoter et/ou se déplacer automatiquement par rapport au dispositif de détection (4) autour de deux axes et le dispositif de détection détecte des marqueurs du porte-marqueurs.
